# EUROPEAN PATENT APPLICATION

(11) **EP 4 477 625 A1**
(43) Date of publication of application: **18.12.2024**
(21) Application number: 24179573.1
(22) Date of filing: 03.06.2024
(51) Int. Cl.: C01G 53/00, H01M 4/00

(54) **POSITIVE ELECTRODE ACTIVE MATERIAL, PREPARATION METHOD THEREOF, POSITIVE ELECTRODE, AND RECHARGEABLE LITHIUM BATTERIES**

(30) Priority: 12.06.2023 KR 20230075036
(71) Applicant: Samsung SDI Co., Ltd., Yongin-si, Gyeonggi-do 17084 (KR)
(72) Inventor: CHOO, Sung Ho, 17084 Yongin-si (KR); KIM, Young-Ki, 17084 Yongin-si (KR); KONG, Youngsun, 17084 Yongin-si (KR); KANG, Seok Mun, 17084 Yongin-si (KR); YOON, Jaesang, 17084 Yongin-si (KR); DOO, Sungwook, 17084 Yongin-si (KR); KANG, Gwiwoon, 17084 Yongin-si (KR); JUN, Dowook, 17084 Yongin-si (KR); KANG, Byungwuk, 17084 Yongin-si (KR); JEONG, Jaeyong, 17084 Yongin-si (KR)
(74) Representative: Marks & Clerk LLP

(57) **Abstract**

A positive electrode active material of a rechargeable lithium battery may include a core particle including a lithium nickel-manganese-aluminium-based composite oxide, and a coating layer disposed on a surface of the core particle and including aluminium, wherein a nickel content of the core particle is about 60 mol% to about 80 mol% and an aluminium content of the core particle is about 1 mol% to about 3 mol% based on about 100 mol% of a total metal excluding lithium, and an aluminium content of the coating layer is about 0.1 mol% to about 2 mol% based on about 100 mol% of the total metal excluding lithium.

## Description

### BACKGROUND

### 1. Field of the Invention

Embodiments of the present disclosure described herein are related to a positive electrode active material, a preparation method thereof, a positive electrode including the positive electrode active material, and a rechargeable lithium battery.

### 2. Description of the Related Art

A portable information device such as a cell phone, a laptop, a smart phone, and/or the like or a vehicle (e.g., an electric vehicle, automobiles, and/or cars) has utilized a rechargeable lithium battery having relatively high energy density and relatively easy portability as a driving power source. Recently, research has been actively conducted to utilize a rechargeable lithium battery relatively with high energy density as a driving power source for vehicles (e.g., hybrid or electric vehicles) or a power storage power source (e.g., a power wall).

In order to implement a rechargeable lithium battery suitable for these purposes, one or more suitable positive electrode active materials are being reviewed. Among them, a lithium nickel-based oxide, a lithium nickel manganese cobalt composite oxide, a lithium nickel cobalt aluminium composite oxide, a lithium cobalt oxide, and/or the like are mainly utilized as a positive electrode active material. However, while recent demand or desire for relatively large-sized, relatively high-capacity, and/or relatively high-energy-density rechargeable lithium batteries has rapidly increased, supply of the cobalt (a rare metal)-containing positive electrode active materials may be insufficient. In other words, because cobalt is expensive and there are not many cobalt reserves left, there is a need or desire to develop a positive electrode active material that excludes cobalt or includes it in a reduced content (e.g., amount).

### SUMMARY

Aspects according to one or more embodiments are directed toward a positive electrode active material including a lithium nickel-manganese-aluminium-based composite oxide, which ensures economic efficiency, relatively high capacity and/or relatively long cycle-life characteristics, and has improved high-voltage and high-temperature characteristics, a method for preparing the same, and a positive electrode and a rechargeable lithium battery including the same.

Aspects according to one or more embodiments are directed toward a positive electrode active material that maximizes or increases capacity while minimizing or reducing production cost, ensures long cycle-life, and improves high-voltage and high-temperature characteristics. A rechargeable lithium battery utilizing the positive electrode active material can exhibit relatively high initial charge/discharge capacity and efficiency even under high-voltage operating conditions and can realize long cycle-life characteristics.

Additional aspects will be set forth in part in the description which follows and, in part, will be apparent from the description, or may be learned by practice of the presented embodiments of the present disclosure.

According to one or more embodiments, a positive electrode active material includes a core particle including a lithium nickel-manganese-aluminium-based composite oxide, and a coating layer disposed on a surface of the core particle and including aluminium, wherein a nickel content (e.g., amount) of the core particle is about 60 mol% to about 80 mol% and an aluminium content (e.g., amount) of the core particle is about 1 mol% to about 3 mol% based on 100 mol% of a total metal excluding lithium, and an aluminium content (e.g., amount) of the coating layer is about 0.1 mol% to about 2 mol% based on 100 mol% of the total metal excluding lithium.

According to one or more embodiments, a method for preparing a positive electrode active material includes mixing a nickel-manganese-aluminium-based composite hydroxide and a lithium raw material and performing a first heat treatment to obtain a lithium nickel-manganese-aluminium-based composite oxide, adding and mixing the obtained lithium nickel-manganese-aluminium-based composite oxide to a solution of an aluminium raw material in an aqueous solvent, drying, and performing a second heat treatment to obtain a positive electrode active material, wherein in the nickel-manganese-aluminium-based composite hydroxide, a nickel content (e.g., amount) is about 60 mol% to about 80 mol% and an aluminium content (e.g., amount) is about 1 mol% to about 3 mol% based on 100 mol% of a total metal excluding lithium, and an aluminium content (e.g., amount) in the aluminium raw material is about 0.1 mol% to about 2 mol% based on 100 mol% of a total metal excluding lithium in the positive electrode active material.

According to one or more embodiments, a positive electrode includes a positive electrode current collector and a positive electrode active material layer on the positive electrode current collector, wherein the positive electrode active material layer includes the aforementioned positive electrode active material.

According to one or more embodiments, a rechargeable lithium battery includes the positive electrode, negative electrode, and an electrolyte.

At least some of the above and other features of the invention are set out in the claims.

### BRIEF DESCRIPTION OF THE DRAWINGS

The accompanying drawings are included to provide a further understanding of the present disclosure, and is incorporated in and constitutes a part of this specification. The drawings illustrate example embodiments of the present disclosure and, together with the description, serve to explain principles of present disclosure. The above and other aspects, features, and advantages of certain embodiments of the present disclosure will be more apparent from the following description taken in conjunction with the accompanying drawings, in which:
FIG. 1 is a perspective view schematically showing a rechargeable lithium battery according to some embodiments.
FIG. 2 is a scanning electron microscopy (SEM) image of the positive electrode active material of Comparative Example 1.
FIG. 3 is an SEM image of the positive electrode active material of Comparative Example 2.
FIG. 4 is a SEM-EDS (Scanning Electron Microscopy - Electron Dispersive X-ray Spectroscopy) image of the cross section of the positive electrode active material of Example 1.
FIG. 5 is a SEM-EDS image of the cross section of the positive electrode active material of Example 2.
FIG. 6 is a SEM-EDS image of the cross section of the positive electrode active material of Example 3.
FIG. 7 is a SEM-EDS image of the cross section of the positive electrode active material of Example 4.
FIG. 8 is a SEM-EDS image of the cross section of the positive electrode active material of Comparative Example 3.
FIG. 9 is a SEM-EDS image of the cross section of the positive electrode active material of Comparative Example 5.
FIG. 10 is an SEM image of the surface of the positive electrode active material of Comparative Example 5.
FIG. 11 is a TOF-SIMS (Time-of-Flight Secondary Ion Mass Spectrometry) depth profile for the positive electrode active material of Example 1.
FIG. 12 is a transmission electron microscopy (TEM) image of a cross section of the positive electrode active material of Example 1.
FIG. 13 is an enlarged TEM image of the portion indicated by a square in FIG. 12.
FIG. 14 is an image obtained by performing EDS analysis on the TEM image of FIG. 13, highlighting O, Al, Mn, and Ni in that order from the left.
FIG. 15 is an EDS line profile showing changes in the contents of O, Al, Mn, and Ni in the direction of the arrows shown in FIGS. 13 and 14.
FIG. 16 is a TEM image and TEM-EDS analysis image of the cross section of the positive electrode active material of Example 1.
FIG. 17 is an EDS line profile showing changes in the contents of O, Al, Mn, and Ni in the direction of the arrow shown in FIG. 16.
FIG. 18 is a TEM image of a cross section of the positive electrode active material of Example 1.
FIG. 19 is an enlarged image (left) of Area 1 of FIG. 18 and an image (right) highlighting aluminium through EDS analysis.
FIG. 20 is an enlarged image (left) and an EDS analysis image (right) of Area 2 of FIG. 18.
FIG. 21 is an enlarged image (left) and an EDS analysis image (right) of Area 3 of FIG. 18.
FIG. 22 is a TEM-EDS image showing a magnified analysis of the primary particles in the outermost layer of the secondary particles in the cross section of the positive electrode active material of Example 1.
FIG. 23 is a TEM image of the portion indicated by arrows 1-6 in FIG. 22.

### DETAILED DESCRIPTION

Hereinafter, specific embodiments will be described in more detail so that those of ordinary skill in the art can easily implement them. However, this disclosure may be embodied in many different forms and is not construed as limited to the example embodiments set forth herein.

The terminology utilized herein is utilized to describe embodiments only, and is not intended to limit the present disclosure. The singular expression includes the plural expression unless the context clearly dictates otherwise.

As utilized herein, "combination thereof" refers to a mixture, laminate, composite, copolymer, alloy, blend, reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

In the drawings, the thickness of layers, films, panels, regions, etc., are exaggerated for clarity and like reference numerals designate like elements throughout, and duplicative descriptions thereof may not be provided the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In some embodiments, "layer" herein includes not only a shape formed on the whole surface when viewed from a plan view, but also a shape formed on a partial surface.

"Group" refers to a group of the Periodic Table of Elements according to the International Union of Pure and Applied Chemistry ("IUPAC") Groups 1-18 grouping system.

The average particle diameter may be measured by a method suitable to those skilled in the art, for example, it may be measured by a particle size analyzer, or may be measured by a transmission electron microscopic image or a scanning electron microscopic image. In some embodiments, it is possible to obtain an average particle diameter value by measuring utilizing a dynamic light scattering method, performing data analysis, counting the number of particles for each particle size range, and calculating from this. Unless otherwise defined, the average particle diameter may refer to a diameter (D50) of particles having a cumulative volume of 50 volume% in a particle size distribution. The average particle diameter refers to a diameter (D50) of particles having a cumulative volume of 50 volume% in the particle size distribution that is obtained by measuring the size (diameter or length of the major axis) of about 20 particles at random in a scanning electron microscope image.

Herein, "or" is not to be construed as an exclusive meaning, for example, "A or B" is construed to include A, B, A+B, and/or the like.

"Metal" is interpreted as a concept that includes ordinary metals, transition metals, and metalloids (semi-metals).

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Hereinafter, positive electrode active material and rechargeable lithium batteries according to example embodiments will be described in more detail.

### Positive Electrode Active Material

In some embodiments, a positive electrode active material includes a core particle including a lithium nickel-manganese-aluminium-based composite oxide, and a coating layer disposed on a surface of the core particle and including aluminium, wherein a nickel content (e.g., amount) of the core particle is about 60 mol% to about 80 mol% and an aluminium content (e.g., amount) of the core particle is about 1 mol% to about 3 mol% based on about 100 mol% of a total metal excluding lithium, and an aluminium content (e.g., amount) of the coating layer is about 0.1 mol% to about 2 mol%.

As the price of cobalt, a rare metal, rises sharply, there is a demand for the development of positive electrode active materials that exclude cobalt or reduce its content (e.g., amount). Among them, positive electrode active materials having an olivine-based crystal structures (such as lithium iron phosphate (LFP), lithium manganese phosphate (LMP), and/or lithium manganese iron phosphate (LMFP)) or a spinel crystal structure (such as lithium manganese oxide (LMO)) have a limitation in realizing high capacity due to the small amount of lithium that can be utilized within the structure. The layered nickel-manganese positive electrode active material has excellent or suitable capacity and efficiency characteristics due to the high lithium availability in the structure, making it suitable as a material for high-capacity batteries. However, as cobalt, which plays a key role in the layered structure, is removed, structural stability decreases, resistance increases, and it becomes difficult to secure long cycle-life characteristics. In some embodiments, when excluding cobalt (e.g., if cobalt is excluded), there is a problem that the side reaction between the positive electrode active material and the electrolyte is accelerated under high-voltage and high-temperature conditions, thereby increasing an amount of gas generated and deteriorating cycle-life characteristics.

In some embodiments, aluminium is introduced into the base material and a lithium nickel-manganese-aluminium-based composite oxide is applied as a core particle to improve structural stability and minimize or reduce production costs. In some embodiments, proposed is a positive electrode active material that maximizes or increases capacity and efficiency by coating a certain amount of aluminium through a specific method to form a substantially uniform coating layer, and can achieve long cycle-life characteristics by reducing gas generation even under high-voltage or high-temperature conditions.

### Core Particle

The core particles include a lithium nickel-manganese-aluminium-based composite oxide.

A content (e.g., amount) of nickel satisfies about 60 mol% to about 80 mol% based on about 100 mol% of a total metal excluding lithium in the positive electrode active material. Nickel is contained in the core particles, but may move to some of the coating layers during the coating process. Therefore, the nickel content (e.g., amount) may refer to the nickel content (e.g., amount) contained in the entire positive electrode active material. The nickel content (e.g., amount) may be, for example about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal excluding lithium in the positive electrode active material. When the nickel content (e.g., amount) satisfies the above ranges, high capacity can be achieved and structural stability can be increased, even if (e.g., when) the cobalt content (e.g., amount) is reduced.

These composite oxides are distinguished from high nickel-based composite oxides with a nickel content (e.g., amount) exceeding about 80 mol%. According to some embodiments, the positive electrode active material having a nickel content (e.g., amount) of about 60 mol% to about 80 mol% is different from the high nickel-based positive electrode active material in residual lithium content (e.g., amount) on the surface, surface pH condition, surface shape, etc., and thus the same coating method cannot be applied, and the performance and application fields are different.

For example, a manganese content (e.g., amount) may be about 10 mol% to about 39 mol%, about 10 mol% to about 35 mol%, about 10 mol% to about 30 mol%, about 10 mol% to about 29 mol%, about 15 mol% to about 39 mol%, about 20 mol% to about 39 mol%, or about 20 mol% to about 30 mol%, based on about 100 mol% of a total metal excluding lithium in the positive electrode active material. Manganese is contained in the core particles, but may move to some of the coating layers during the coating process, and therefore the manganese content (e.g., amount) may refer to the manganese content (e.g., amount) contained in the entire positive electrode active material. When the manganese content (e.g., amount) satisfies the above range, the positive electrode active material can improve structural stability while realizing high capacity.

An aluminium content (e.g., amount) in the core particle may be about 1 mol% to about 3 mol%, for example, about 1 mol% to about 2.5 mol%, about 1 mol% to about 2 mol%, or about 1 mol% to about 1.9 mol% based on about 100 mol% of a total metal excluding lithium in the positive electrode active material. Herein, the aluminium content (e.g., amount) refers to the content (e.g., amount) of aluminium present in the core particle. If (e.g., when) the aluminium content (e.g., amount) of the core particle satisfies the above range, a stable layered structure can be maintained even if (e.g., when) cobalt is excluded from the core particle, the problem of structure collapse due to charging and discharging can be suppressed or reduced, and long cycle-life characteristics of the positive electrode active material can be realized.

According to some embodiments, a concentration of aluminium within the core particle may be substantially uniform. In other words, it refers to that there is no concentration gradient of aluminium from the center to the surface within the core particle, or that the aluminium concentration outside the core particle is neither higher nor lower than inside the core particle, and that the aluminium within the core particle is evenly distributed. This can be said to be a structure obtained by synthesizing a composite oxide utilizing nickel-manganese-aluminium-based hydroxide as a precursor by utilizing aluminium raw materials during precursor production without additional doping of aluminium during the synthesis of the core particle. The core particle may be in the form of a secondary particle in which a plurality of primary particles are aggregated, and the aluminium content (e.g., amount) inside the primary particle may be said to be the same or similar regardless of the location of the primary particle. In other words, if (e.g., when) a primary particle is selected at a random position in the cross section of a secondary particle and the aluminium content (e.g., amount) is measured inside the primary particle rather than at the interface, regardless of the location of the primary particle, that is, whether the primary particle is close to the center of the secondary particle or close to the surface, the aluminium content (e.g., amount) can be expressed as being the same/similar/substantially uniform. In this structure, a stable layered structure can be maintained even if (e.g., when) cobalt is absent or is present in a very small amount, and aluminium by-products or aluminium aggregates are not generated, and thus the capacity, efficiency, and cycle-life characteristics of the positive electrode active material can be improved at the same time.

For example, the lithium nickel-manganese-aluminium-based composite oxide may be represented by Chemical Formula 1.

**Chemical Formula 1** Liₐ₁Niₓ₁Mn_{y1}Al_{z1}M¹_{w1}O_{2-b1}X_{b1}

In Chemical Formula 1, 0.9≤a1≤1.8, 0.6≤x1≤0.8, 0.1≤y1≤0.39, 0.01<z1≤ 0.03, 0≤w1≤0.29, 0.9≤x1+y1+z1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, and Zr, and X is one or more elements selected from among F, P, and S.

In Chemical Formula 1, 0.9≤a1≤1.5, or 0.9≤a1≤1.2. In some embodiments, 0.6≤x1≤0.79, 0.6≤x1≤0.78, 0.6≤x1≤0.75, 0.65≤x1≤0.8, or 0.7≤x1≤0.79; 0.1≤y1≤ 0.35, 0.1≤y1≤0.30, 0.1≤y1≤0.29, 0.15≤y1≤0.39, or 0.2≤y1≤0.3; 0.01<z1≤0.025, 0.01<z1≤0.02, or 0.01<z1≤0.019; 0≤w1≤0.28, 0≤w1≤0.27, 0≤w1≤0.26, 0≤w1≤0.25, 0≤w1≤0.24, 0≤w1≤0.23, 0≤w1≤0.22, 0≤w1≤0.21, 0≤w1≤0.2, 0≤w1≤0.15, 0≤w1≤0.1, or 0≤w1≤0.09.

For example, the lithium nickel-manganese-aluminium-based composite oxide of the core particle may be a cobalt-free compound that does not contain cobalt or contains a very small amount of cobalt.

The core particle may be in the form of secondary particles made by aggregating a plurality of primary particles. The secondary particles may be spherical, elliptical, polyhedral, or irregular in shape, and the primary particles may be spherical, elliptical, plate-shaped, or a combination thereof.

The core particle is susceptible to chemical attack from components in the electrolyte when the battery is operated under high-voltage or high-temperature conditions, and many side reactions with the electrolyte may occur. As a result, there is a problem that battery cycle-life and safety are reduced due to the large amount of gas generated, but these problems can be solved by introducing a coating layer according to some embodiments that will be described later.

### Coating Layer

The aluminium content (e.g., amount) in the coating layer is about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on about 100 mol% of a total metal excluding lithium in the positive electrode active material. This refers only to an aluminium content (e.g., amount) included in the coating layer, separately from the aluminium contained in the core particle. The aluminium content (e.g., amount) in the coating layer can be measured, for example, through SEM-EDS analysis of the surface or cross section of the positive electrode active material. When the aluminium content (e.g., amount) in the coating layer satisfies the ranges, the coating layer may have a substantially uniform and thin thickness, which may not increase resistance of the positive electrode active material and effectively suppress or reduce a side reaction with the electrolyte and thereby, improve cycle-life characteristics of a rechargeable lithium battery under high-voltage and high-temperature conditions. For example, when the aluminium content (e.g., amount) in the coating layer is excessive, because no substantially uniform coating layer is formed, or resistance is increased, charge and discharge efficiency and cycle-life characteristics may be deteriorated, but when the aluminium content (e.g., amount) in the coating layer is too small, because the coating layer may not have an appropriate or suitable thickness, the effect of suppressing a side reaction with an electrolyte may be deteriorated.

The coating layer according to some embodiments may include (e.g., be in the form of a film) continuously around (e.g., surrounding) the surface of the core particle, for example, it may include (e.g., in the form of) a shell around (e.g., surrounding) the entire surface of the core particle. This is distinguished from a structure that the coating layer is coated on a portion of the surface of the core particle. The coating layer according to some embodiments may be formed to have a very thin and substantially uniform thickness as well as entirely cover the surface of the core particle, which may neither increase resistance of the positive electrode active material nor deteriorate capacity but exhibits improved structural stability and may be effectively suppressed or reduced from a side reaction with the electrolyte, resultantly reducing an amount of gas generated under high-voltage and high-temperature conditions and realizing long cycle-life characteristics.

The coating layer may have a thickness of about 30 nanometers (nm) to about 200 nm, for example, about 30 nm to about 150 nm, about 50 nm to about 200 nm, about 80 nm to about 200 nm, or about 100 nm to about 200 nm. When the coating layer satisfies the thickness ranges, the structural stability of the positive electrode active material may be improved without increasing resistance or reducing capacity due to the coating, and the side reaction with the electrolyte may be effectively suppressed or reduced. The thickness of the coating layer may be, for example, measured through TOF-SIMS, XPS, or EDS analysis, etc., and the thickness ranges of the coating layer may be measured through TEM-EDS line profiles.

The coating layer according to some embodiments is characterized to have a thin and substantially uniform thickness at the level of tens to hundreds of nano meters. For example, in one positive electrode active material particle, the coating layer thickness may have a deviation of about 20% or less, about 18% or less, or about 15% or less. Herein, the deviation of the coating layer thickness refers to a coating layer thickness in one positive electrode active material particle. The deviation of the coating layer thickness may be, for example, obtained by measuring each thickness at about 10 points on the electron microscope image of the cross-section of one positive electrode active material particle, calculating an arithmetic average value thereof, and then, dividing an absolute value of a difference between each thickness measurement and the arithmetic average value by the arithmetic average value and multiplying a product therefrom by 100. When the deviation of the coating layer thickness satisfies the ranges, the coating layer with a substantially uniform thickness may be well formed as a film on the positive electrode active material particle surface, which may improve structural stability of the positive electrode active material and effectively suppress or reduce a side reaction with the electrolyte and resultantly, minimize or reduce an increase in resistance or capacity deterioration by the coating.

The coating layer may include an aluminium compound with a layered structure. In other words, the coating layer may include a lithium aluminium oxide with a layered structure, for example, LiAlO₂. The coating layer with a layered structure may be formed to be thin and substantially uniform on the surface of the core particle to protect the core particle as well as make movement of lithium more smooth and increase capacity and thus improve cycle-life characteristics.

On the other hand, the coating layer may further include nickel, manganese, or a combination thereof in addition to the aluminium. When the nickel and the manganese, which have been originally contained in the core particle, may flow into the coating layer during the formation of the coating layer, each content (e.g., amount) thereof is not particularly limited. The coating layer according to some embodiments may be called to be an aluminium-rich coating layer which necessarily contains the aluminium and optionally includes the nickel and the manganese and also, formed to have a thin and substantially uniform thickness to improve high voltage characteristics of the positive electrode active material and enhance cycle-life characteristics.

### Grain Boundary Coating Portion

The aluminium may be diffused into the core particle during formation of the coating layer. Accordingly, the positive electrode active material according to some embodiments may further include a grain boundary coating portion which is disposed on the surface of the primary particles inside the secondary particle and contains the aluminium. Herein, the secondary particle refers to the core particle, the inside the secondary particle may refer to the entire inside excluding the surface of the secondary particle or a region from the surface of the secondary particle to about 60 length% of a radius toward the center of the secondary particle. The grain boundary coating portion is distinguished from the coating layer on the core particle surface and refers to a coating portion formed on the primary particle surface inside the core particle. The presence of the grain boundary coating portion may be confirmed through an SEM-EDS analysis, etc. on the cross-section of the positive electrode active material. Herein, the grain boundary coating portion is formed to be an aluminium grain boundary coating portion, structurally more stabilizing the positive electrode active material and improving cycle-life characteristics.

An aluminium content (e.g., amount) in the grain boundary coating portion is not particularly limited but may be, for example, smaller than the aluminium content (e.g., amount) in the coating layer.

The grain boundary coating portion may also include an aluminium compound with a layered structure, similar to the coating layer described above. For example, the grain boundary coating portion may include lithium aluminium oxide with a layered structure, for example, LiAlO₂. The grain boundary coating portion with a layered structure, which is formed within the core particle, may promote movement of lithium, increase capacity, and improve structural stability, resulting in improving cycle-life characteristics.

Additionally, the grain boundary coating portion may further include nickel, manganese, or a combination thereof in addition to aluminium. The grain boundary coating part may be referred to an aluminium-rich coating portion.

The average particle diameter (D50) of the positive electrode active material according to some embodiments is not particularly limited, but may be, for example, about 10 µm to about 18 µm, about 11 µm to about 16 µm, or about 12 µm to about 15 µm. The average particle diameter refers to a diameter (D50) of particles having a cumulative volume of 50 volume% in the particle size distribution that is obtained by measuring the size (diameter or length of the major axis) of about 20 particles at random in a scanning electron microscope image for a positive electrode active material. When the average particle diameter of the positive electrode active material satisfies the ranges, high-capacity and long cycle-life may be realized, and it is advantageous to the coating layer according to some embodiments.

In the positive electrode active material according to some embodiments, a cobalt content (e.g., amount) may be, for example, about 0.01 mol% or less, about 0.005 mol% or less, about 0.001 mol% or less, or for example, about 0 mol% to about 0.01 mol% based on 100 mol% of a total metal excluding lithium. The positive electrode active material according to some embodiments may be, for example, a cobalt-free positive electrode active material.

In some embodiments, another positive electrode active material according to some embodiments may be characterized not to contain sodium. In general, in a process of preparing a positive electrode active material, sodium ions may be utilized, but according to a manufacturing method described later, a core particle with a stable structure and a coating layer with a substantially uniform thickness can be formed without using the sodium ions.

### Method for Preparing Positive Electrode Active Material

In some embodiments, a method for preparing a positive electrode active material includes (e.g. may consist of) mixing a nickel-manganese-aluminium-based composite hydroxide and a lithium raw material and performing a first heat treatment to obtain a lithium nickel-manganese-aluminium-based composite oxide, adding and mixing the obtained lithium nickel-manganese-aluminium-based composite oxide to a solution of an aluminium raw material in an aqueous solvent, drying, and performing a second heat treatment to obtain a positive electrode active material. In the nickel-manganese-aluminium-based composite hydroxide, a nickel content (e.g., amount) is about 60 mol% to about 80 mol% and an aluminium content (e.g., amount) is about 1 mol% to about 3 mol% based on 100 mol% of a total metal excluding lithium, and an aluminium content (e.g., amount) in the aluminium raw material is about 0.1 mol% to about 2 mol% based on 100 mol% of a total metal excluding lithium in the positive electrode active material. Through this method, the aforementioned positive electrode active material can be manufactured.

The nickel-manganese-aluminium-based composite hydroxide is a precursor of the core particle including (e.g., in the form of) secondary particles in which a plurality of primary particles are aggregated and may include no amount or a very small amount of cobalt, which may be, for example, a cobalt-free nickel-manganese-aluminium-based composite hydroxide. The nickel-manganese-aluminium-based composite hydroxide may be manufactured in a common co-precipitation method.

A method for preparing the positive electrode active material according to some embodiments is characterized to utilize a precursor of a nickel-manganese-aluminium-based composite hydroxide, in which aluminium is evenly dispersed in the structure by utilizing an aluminium raw material to prepare the precursor, when manufacturing the core particle without additionally doping aluminium. Such a precursor may be utilized to achieve a positive electrode active material capable of stably maintaining a layered structure without cobalt despite repetitive charges and discharges, and because an aluminium by-product or an aluminium aggregate is not formed, capacity, efficiency characteristics, and cycle-life characteristics of the positive electrode active material may be improved.

In the nickel-manganese-aluminium-based composite hydroxide, a nickel content (e.g., amount) may be about 60 mol% to about 80 mol%, for example, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal. When the nickel content (e.g., amount) satisfies the ranges, high capacity may be realized, but even though the cobalt content (e.g., amount) is decreased, structural stability may be increased. Such a composite hydroxide is distinguished from high-nickel complex composite hydroxide with a nickel content (e.g., amount) of greater than about 80 mol%. Because the composite hydroxide according to some embodiments has different surface characteristics, for example, different residual lithium content (e.g., amount) on the surface, pH, shape, etc. from the high-nickel composite hydroxide, the same coating method may not be applied thereto.

A manganese content (e.g., amount) in the nickel-manganese-aluminium-based composite hydroxide may be about 10 mol% to about 39 mol%, about 10 mol% to about 35 mol%, about 10 mol% to about 30 mol%, about 10 mol% to about 29 mol%, about 15 mol% to about 39 mol%, about 20 mol% to about 39 mol%, about 20 mol% to about 30 mol%, based on about 100 mol% of a total metal. In some embodiments, an aluminium content (e.g., amount) in the nickel-manganese-aluminium-based composite hydroxide may be about 1 mol% to about 3 mol%, for example, about 1 mol% to about 2.5 mol%, about 1 mol% to about 2 mol%, or about 1 mol% to about 1.9 mol%. When the manganese and aluminium contents of the composite hydroxide satisfy the above ranges, high capacity can be realized while structural stability of the positive electrode active material can be increased, and production price can be lowered to increase economic efficiency.

In the nickel-manganese-aluminium-based composite hydroxide, a cobalt content (e.g., amount) may be less than or equal to about 0.01 mol%, less than or equal to about 0.005 mol%, or less than or equal to about 0.001 mol% based on 100 mol% of a total metal. This nickel-manganese-aluminium-based composite hydroxide is economical because it avoids the increase in unit cost caused by cobalt, maximizes or increases capacity, and improves structural stability.

The nickel-manganese-aluminium-based composite hydroxide may be represented by Chemical Formula 2.

**Chemical Formula 2** Niₓ₂Mn_{y2}Al_{z2}M²_{w2}(OH)₂

In Chemical Formula 2, 0.6≤x2≤0.8, 0.1≤y2≤0.39, 0.01<z2≤0.03, 0≤w2≤ 0.29, and 0.9≤x2+y2+z2+w2≤1.1, and M² is one or more an element selected from among Al, B, Ba, Ca, Ce, Cr, Fe, Mg, Mo, Nb, Si, Sn, Sr, Ti, V, W, and Zr. In some embodiments, 0.6≤x2≤0.79, 0.6≤x2≤0.78, 0.6≤x2≤0.75, 0.65≤x2≤0.8, or 0.7≤x2≤ 0.79; 0.1≤y2≤0.35, 0.1≤y2≤0.30, 0.1≤y2≤0.29, 0.15≤y2≤0.39, or 0.2≤y2≤0.3; 0.01<z2≤0.025, 0.01<z2≤0.02, or 0.01<z2≤0.019; 0≤w2≤0.28, 0≤w2≤0.27, 0≤w2≤ 0.26, 0≤w2≤0.25, 0≤w2≤0.24, 0≤w2≤0.23, 0≤w2≤0.22, 0≤w2≤0.21, 0≤w2≤0.2, 0≤ w2≤0.15, 0≤w2≤0.1, or 0≤w2≤0.09.

The nickel-manganese-aluminium-based composite hydroxide is in the form of particles, and the particles have an average particle diameter (D50) of about 10 µm to about 18 µm, about 11 µm to about 16 µm, or about 12 µm to about 15 µm.

The nickel-manganese-aluminium-based composite hydroxide and a lithium raw material may be mixed in a mole ratio of about 1:0.9 to about 1:1.8, for example, about 1:0.9 to about 1:1.5 or about 1:0.9 to about 1:1.2.

The first heat treatment may be performed under an oxygen atmosphere, for example, within a temperature range of about 750 °C to about 950 °C, or about 780 °C to about 900 °C, or about 810 °C to about 890 °C for about 2 hours to about 20 hours or about 4 hours to about 12 hours.

Through the first heat treatment, the lithium nickel-manganese-aluminium-based composite oxide may be obtained. The obtained nickel-manganese-aluminium-based composite oxide may include nickel in an amount of about 60 mol% or more, for example, about 60 mol% to about 80 mol% based on about 100 mol% of a total metal excluding lithium in the obtained nickel-manganese-aluminium-based composite oxide but include no cobalt or include the cobalt in a very small amount of about 0.01 mol%. Because such a composite oxide has a significantly different residual lithium content (e.g., amount) and different surface characteristics from an oxide with other compositions, for example, a nickel-based oxide such as a lithium nickel-cobalt-manganese-based composite oxide or a lithium nickel-cobalt-aluminium-based composite oxide, etc., coating methods may not succeed in forming a good or suitable coating layer thereon in the form of a substantially uniform film. However, some embodiments propose a method of improving high voltage and high temperature characteristics by forming a coating layer with a very thin and substantially uniform thickness on the surface of the lithium nickel-manganese-aluminium-based composite oxide having a nickel content (e.g., amount) of about 60 mol% to about 80 mol% and a very small content (e.g., amount) of cobalt.

In some embodiments, the lithium nickel-manganese-aluminium-based composite oxide obtained through the first heat treatment is added to an aqueous solvent mixed with an aluminium raw material and then, mixed therewith and then, dried and secondarily heat-treated to form the coating layer according to some embodiments. This is a type or kind of wet coating method.

The aqueous solvent may include distilled water, an alcohol-based solvent, or a combination thereof.

The aluminium raw material may include, for example, aluminium nitrate, aluminium sulfate, aluminium carbonate, aluminium hydroxide, or a combination thereof. For example, the aluminium raw material may include aluminium sulfate, which is advantageous to form a coating layer with a substantially uniform thickness on the surface of the lithium nickel-manganese-aluminium-based composite oxide particle.

The aluminium raw material is a raw material for forming the coating layer and may be designed to have an aluminium content (e.g., amount) in a range of about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in a finally obtained positive electrode active material. When the contents of the coating raw material is designed to have the ranges, the coating layer may be formed to have a thin and substantially uniform thickness of tens or hundreds of nanometers, which may reduce an amount of generated gas of a rechargeable lithium battery under high voltage or high temperature conditions and improve high-capacity and long cycle-life characteristics.

A solution prepared by mixing the aluminium raw material with the aqueous solvent may have pH of about 1.5 to about 3.5, for example, about 2.0 to about 3.4, about 2.5 to about 3.3, about 2.7 to about 3.3, or about 2.9 to about 3.2. The adding and mixing the lithium nickel-manganese-aluminium-based composite oxide with the aqueous solvent in which the aluminium raw material may be performed for about 5 minutes to about 80 minutes, about 5 minutes to about 60 minutes, or about 5 minutes to about 40 minutes. After the stirring, the mixed solution may have pH of about 4.5 to about 8.5, for example, about 5.0 to about 8.0, about 5.5 to about 7.5, or about 6.0 to about 7.0. When these conditions are satisfied, it is advantageous to form (e.g., enhances the formation of) a coating layer with a substantially uniform thickness.

After the mixing, the drying is performed to remove the solvent, for example, at about 40 °C to about 240 °C, about 100 °C to about 220 °C, or about 150 °C to about 200 °C.

The second heat treatment may be understood to form the coating layer and performed, for example, at about 700 °C to about 850 °C, about 750 °C to about 840 °C, or about 800 °C to about 830 °C under an oxygen atmosphere for about 2 hours to about 20 hours or about 3 hours to about 10 hours. In some embodiments, the second heat treatment temperature may be lower than the first heat treatment temperature, and the second heat treatment time may be the same as or shorter than the first heat treatment time. Under these conditions, the second heat treatment may be performed to obtain a desired or suitable coating layer.

### Positive Electrode

In some embodiments, a positive electrode includes a positive electrode current collector and a positive electrode active material layer on the positive electrode current collector, wherein the positive electrode active material layer includes the aforementioned positive electrode active material. The positive electrode active material layer may further include other types (kinds) of positive electrode active materials in addition to the positive electrode active materials described above. Additionally, the positive electrode active material layer may optionally further include a binder, a conductive material, or a combination thereof.

According to some embodiments, a loading level of the positive electrode active material layer may be about 10 mg/cm² to about 40 mg/cm², for example about 10 mg/cm² to about 30 about mg/cm², or about 10 mg/cm² to about 20 mg/cm². Additionally, a density of the positive electrode active material layer in the final compressed positive electrode may be about 3.3 g/cc to about 3.7 g/cc, for example, about 3.3 g/cc to about 3.6 g/cc, or about 3.4 g/cc to about 3.58 g/cc. When applying the positive electrode active material according to some embodiments, it is advantageous to implement such a loading level and positive electrode density, and a positive electrode that satisfies the loading level and positive electrode density in the above range is suitable for implementing a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material (e.g., conductor, electron conductor, electric conductor, etc.) is included to provide electrode conductivity and any electrically conductive material may be utilized as a conductive material unless it causes a chemical change. Examples of the conductive material may include a carbon-based material such as natural graphite, artificial graphite, carbon black, acetylene black, Ketjen black, a carbon fiber, a carbon nanofiber, and a carbon nanotube; a metal-based material containing copper, nickel, aluminium, silver, etc. and include (e.g., be in the form of) metal powder or metal fiber; a conductive polymer such as a polyphenylene derivative; or a mixture thereof.

A content (e.g., amount) of the binder and the conductive material may be about 0.5 wt% to about 5 wt%, respectively, based on about 100 wt% of the positive electrode active material layer.

The positive electrode current collector may include Al, but is not limited thereto.

### Rechargeable Lithium Battery

Some embodiments provide a rechargeable lithium battery including the aforementioned positive electrode, negative electrode, and electrolyte.

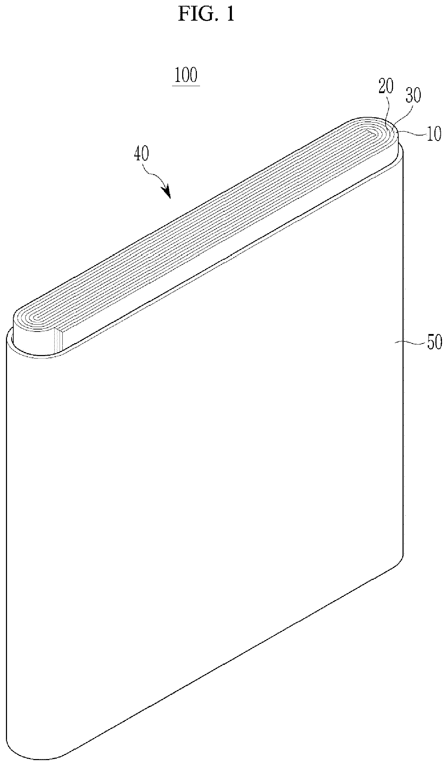

The rechargeable lithium battery may be classified into cylindrical, prismatic, pouch, coin, etc. depending on the shape. FIG. 1 is a schematic view showing a rechargeable lithium battery according to some embodiments. Referring to FIG. 1, the rechargeable lithium battery 100 includes an electrode assembly 40 with a separator 30 interposed between the positive electrode 10 and the negative electrode 20, and a case 50 in which the electrode assembly 40 is housed. The positive electrode 10, negative electrode 20, and separator 30 may be impregnated with an electrolyte.

The rechargeable lithium battery according to some embodiments may be rechargeable at a high voltage, or may be suitable for being driven at a high voltage. For example, the charging voltage of the rechargeable lithium battery may be greater than or equal to about 4.45 V, about 4.45 V to about 4.7 V, about 4.45 V to about 4.6 V, or about 4.45 V to about 4.55 V. By applying the positive electrode active material according to some embodiments, the rechargeable lithium battery can significantly reduce an amount of gas generated even when charged at high voltage and can achieve high capacity and long cycle-life characteristics.

### Negative Electrode

The negative electrode may include a current collector and a negative electrode active material layer on the current collector, and may further include a negative electrode active material, a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn (e.g. Na, K, Rb, Cs, Be, Mg, Ca, Sr, Si, Sb, Pb, In, Zn, Ba, Ge, Al, and Sn).

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, and a combination thereof)), or a combination thereof. The Sn-based negative electrode active material may be Sn, SnO₂, a Sn alloy, or a combination thereof.

The silicon-carbon composite may be a composite of silicon and amorphous carbon. An average particle diameter (D50) of the silicon-carbon composite particles may be, for example, about 0.5 µm to about 20 µm. According to some embodiments, the silicon-carbon composite may include (e.g., be in the form of) silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on about 100 wt% of the silicon-carbon composite. In some embodiments, when the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on about 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 micrometers (µm), or about 10 nm to about 200 nm. The silicon particles may exist as silicon alone, in the form of a silicon alloy, or in an oxidized form. The oxidized form of silicon may be represented by SiOₓ (0<x≤2). At this time, the atomic content (e.g., amount) ratio of Si:O, which indicates a degree of oxidation, may be about 99:1 to about 33:67. As utilized herein, when a definition is not otherwise provided, an average particle diameter (D50) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and utilized, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is utilized as the negative electrode binder, it may further contain a cellulose-based compound capable of imparting viscosity. The cellulose-based compound may be one or more types (kinds) of carboxymethyl cellulose, hydroxypropylmethyl cellulose, methyl cellulose, or an alkali metal salt thereof. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material (e.g., conductor) is included to provide electrode conductivity and any electrically conductive material may be utilized as a conductive material unless it causes a chemical change. Specific examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

A content (e.g., amount) of the negative electrode active material may be about 95 wt% to about 99.5 wt% based on about 100 wt% of the negative electrode active material layer, and a content (e.g., amount) of the binder may be about 0.5 wt% to about 5 wt% based on about 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may include (e.g., be in the form of) a foil, sheet, or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In some embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond, and/or the like; amides such as dimethylformamide; dioxolanes such as 1,3-dioxolane, 1,4-dioxolane, and/or the like; sulfolanes, and/or the like.

The non-aqueous organic solvent can be utilized alone or in a mixture of two or more types (kinds), and when two or more types (kinds) are utilized in a mixture, a mixing ratio can be appropriately adjusted according to the desired or suitable battery performance, which is suitable to those working in the field.

In some embodiments, when utilizing a carbonate-based solvent, a cyclic carbonate and a chain carbonate may be mixed and utilized, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and utilized in a volume ratio of about 1:1 to about 30:1.

The electrolyte may further include vinylethyl carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂), (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

A concentration of lithium salt may be within the range of about 0.1 M to about 2.0 M. When the concentration of lithium salt is within the above range, the electrolyte has appropriate or suitable ionic conductivity and viscosity, and thus excellent or suitable performance can be achieved and lithium ions can move effectively.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both (e.g., opposite) surfaces of the porous substrate.

The porous substrate may be a polymer film formed of any polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described. However, the following examples are only examples of the present disclosure, and the present disclosure is not limited to the following examples.

### Example 1

### 1. Manufacture Positive Electrode Active Material

Ni_{0.75}Mn_{0.23}Al_{0.02}(OH)₂ and LiOH were mixed in a mole ratio of about 1:1 and then, primarily heat treated at about 850 °C for about 8 hours under an oxygen atmosphere to manufacture a composite oxide in the form of secondary particle having a composition of LiNi_{0.75}Mn_{0.23}Al_{0.02}O₂ and an average particle diameter (D50) of about 14 µm.

After mixing aluminium sulfate in a distilled water solvent, the manufactured composite oxide was added thereto and then, mixed for about 20 minutes to about 60 minutes. Herein, an aluminium content (e.g., amount) in the aluminium sulfate was designed to be about 1.0 mol% based on about 100 wt% of the total metal excluding lithium in a final positive electrode active material. After removing the solvent from the mixed solution, the residue was dried at about 190 °C and secondarily heat-treated at about 825 °C under an oxygen atmosphere for about 8 hours to obtain the final positive electrode active material.

### 2. Manufacturing of Rechargeable Lithium Battery Cell

About 98.5 wt% of the positive electrode active material, about 1.0 wt% of a polyvinylidene fluoride binder, and about 0.5 wt% of a carbon nanotube conductive material were mixed to prepare positive electrode active material layer slurry, and the slurry was coated on an aluminium foil current collector and then, dried and compressed to manufacture a positive electrode. Herein, a positive electrode active material layer was formed at a loading level of 10 mg/cm², and the final compressed positive electrode had density of about 3.4 g/cc.

On the other hand, negative electrode active material layer slurry was prepared by mixing about 97.5 wt% of a graphite negative electrode active material, about 1.5 wt% of carboxymethyl cellulose, and about 1 wt% of a styrene butadiene rubber in a water solvent. The negative electrode active material layer slurry was coated on a copper foil current collector and then, dried and compressed to manufacture a negative electrode.

A polytetrafluoroethylene separator was utilized, and an electrolyte prepared by dissolving about 1 M LiPF₆ in a mixed solvent of ethylene carbonate and dimethyl carbonate in a volume ratio of about 3:7 was utilized to manufacture a rechargeable lithium battery cell in a common method.

### Example 2

A positive electrode active material and a rechargeable lithium battery cell were manufactured in substantially the same manner as in Example 1 except that the aluminium content (e.g., amount) in aluminium sulfate was designed to be about 0.5 mol% based on about 100 wt% of a total amount of metals excluding lithium in a final positive electrode active material.

### Example 3

A positive electrode active material and a rechargeable lithium battery cell were manufactured in substantially the same manner as in Example 1 except that the aluminium content (e.g., amount) in aluminium sulfate was designed to be about 1.5 mol% based on about 100 wt% of a total amount of metals excluding lithium in a final positive electrode active material.

### Example 4

A positive electrode active material and a rechargeable lithium battery cell were manufactured in substantially the same manner as in Example 1 except that the aluminium content (e.g., amount) in aluminium sulfate was designed to be about 2.0 mol% based on about 100 wt% of a total amount of metals excluding lithium in a final positive electrode active material.

### Comparative Example 1

Ni_{0.75}Mn_{0.25}(OH)₂, LiOH, and Al₂O₃ were mixed in a mole ratio of about 1:1:0.02 and then, heat-treated at about 850 °C for about 8 hour under an oxygen atmosphere to prepare an aluminium-doped composite oxide in the form of secondary particles having a composition of LiNi_{0.75}Mn_{0.23}Al_{0.02}O₂ and an average particle diameter (D50) of about 14 µm. This was utilized as a positive electrode active material to manufacture a rechargeable lithium battery cell in substantially the same manner as in Example 1.

### Comparative Example 2

Ni_{0.75}Mn_{0.25}Al_{0.02}(OH)₂ and LiOH were mixed in a mole ratio of about 1:1 and then, heat-treated at about 850 °C for about 8 hours under an oxygen atmosphere to prepare an aluminium-doped composite oxide in the form of secondary particles having a composition of LiNi_{0.75}Mn_{0.23}Al_{0.02}O₂ and an average particle diameter (D50) of about 14 µm. This was utilized as a positive electrode active material to manufacture a rechargeable lithium battery cell in substantially the same manner as in Example 1.

### Comparative Example 3

A positive electrode active material was prepared in substantially the same manner as in Example 1 except that the aluminium coating was performed in a dry manner. In other words, the composite oxide including (e.g., in the form of) secondary particles having a composition of LiNi_{0.75}Mn_{0.23}Al_{0.02}O₂ was mixed with aluminium oxide powder and then, heat-treated at about 825 °C for about 8 hours under an oxygen atmosphere to prepare an Al-coated positive electrode active material in the dry manner. This was utilized as a positive electrode active material to manufacture a rechargeable lithium battery cell in substantially the same manner as in Example 1.

### Comparative Example 4

A rechargeable lithium battery cell was manufactured in substantially the same manner as in Example 1 except that a composite oxide in the form of secondary particles having a composition of LiNi_{0.94}Co_{0.03}Al_{0.03}O₂ and an average particle diameter (D50) of about 14 µm was utilized as a positive electrode active material and no coating layer was formed.

### Comparative Example 5

A positive electrode active material was prepared in substantially the same manner as in Comparative Example 4 except that Al wet coating was performed in the same manner as Example 1. This was utilized as a positive electrode active material to manufacture a rechargeable lithium battery cell in substantially the same manner as substantially in Example 1.

### Comparative Example 6

A positive electrode active material and a rechargeable lithium battery cell were manufactured in substantially the same manner as in Example 1 except that the aluminium content (e.g., amount) of aluminium sulfate was designed to be about 3.0 mol% based on about 100 wt% of a total amount of metals excluding lithium in a final positive electrode active material.

Design details of the positive electrode active materials of Examples 1 to 4 and Comparative Examples 1 to 6 are briefly provided in Table 1.

### Evaluation Example 1: Comparison of Comparative Examples 1 and 2

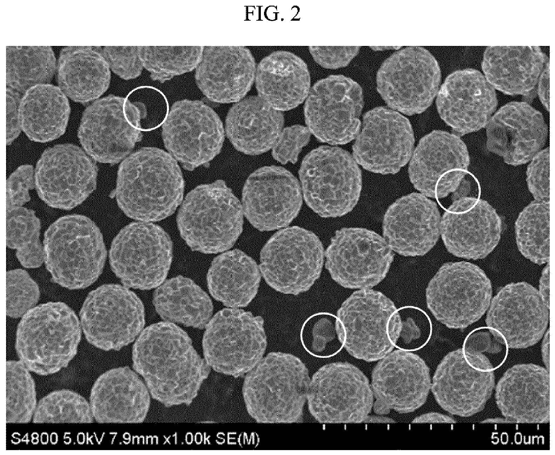

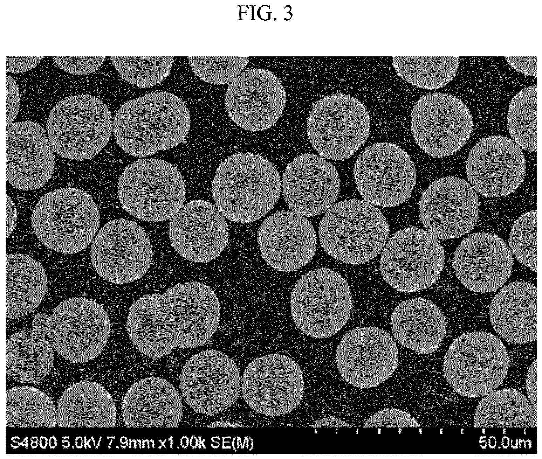

FIG. 2 shows an SEM image of the positive electrode active material of Comparative Example 1, and FIG. 3 shows an SEM image of the positive electrode active material of Comparative Example 2. The lithium nickel-manganese-aluminium oxide of Comparative Example 1 was prepared by synthesizing the lithium nickel-manganese oxide and additionally doping aluminium thereon, and referring to FIG. 2, the positive electrode active material turned out to have uneven secondary particle surfaces, and as shown in the circled region, aluminium by-products were formed. In contrast, in the lithium nickel-manganese-aluminium oxide of Comparative Example 2 in which nickel-manganese-aluminium hydroxide was utilized as a precursor, and aluminium was uniformly distributed at a substantially uniform concentration on the secondary particles, and referring to FIG. 3, a positive electrode active material of secondary particles with very even spherical surfaces was successfully synthesized without no aluminium by-product. The examples were understood to utilize Comparative Example 2 as a base material.

### Evaluation Example 2: Comparison of Coating Layers

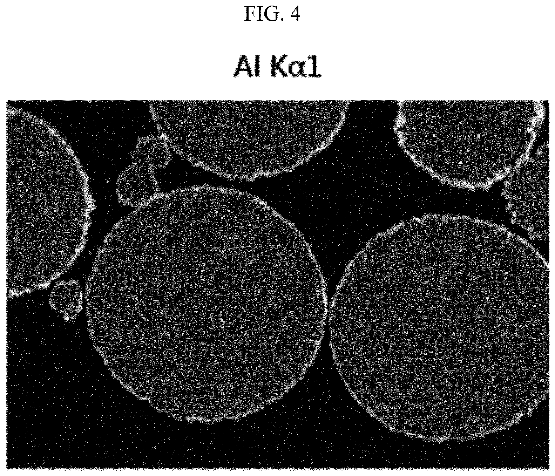

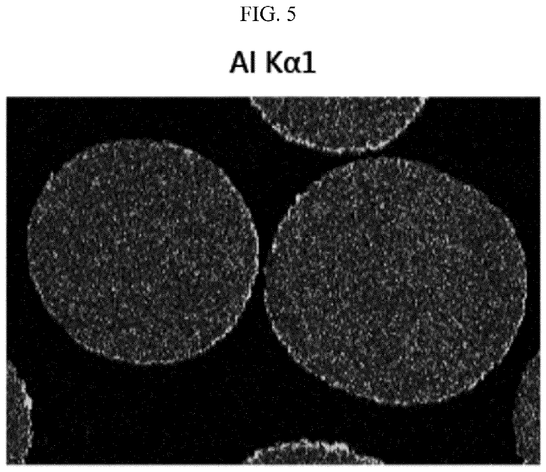

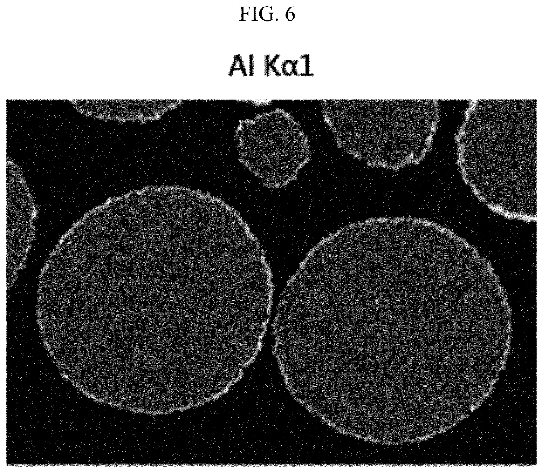

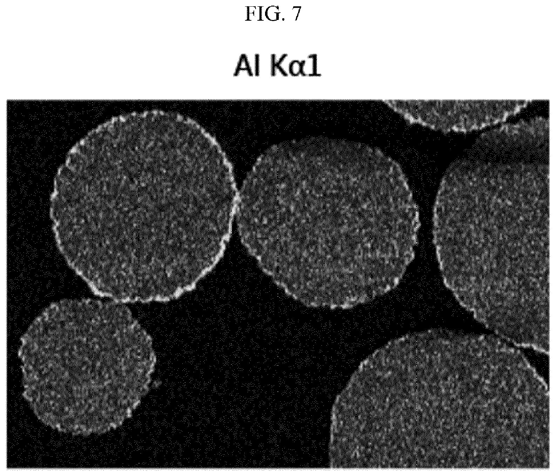

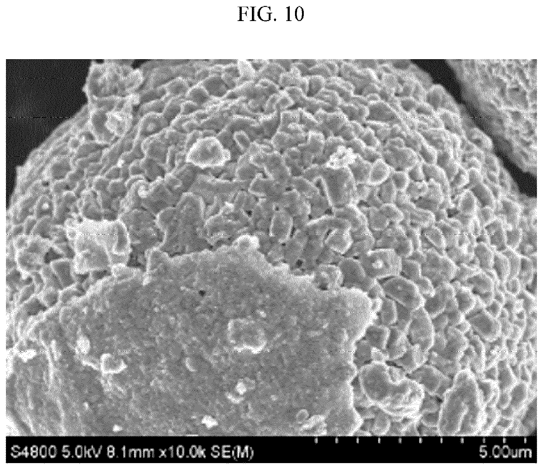

FIGS. 4 to 9 sequentially show SEM-EDS images of the cross-sections of the positive electrode active materials of Examples 1 to 4 and Comparative Examples 3 and 5. In the drawings, aluminium was highlighted. Furthermore, FIG. 10 shows an SEM image of the positive electrode active material surface of Comparative Example 5.

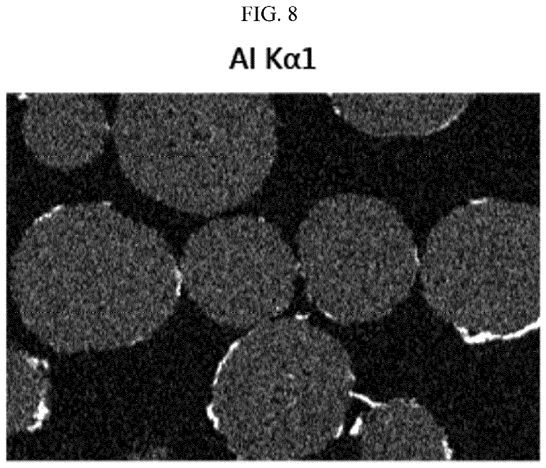

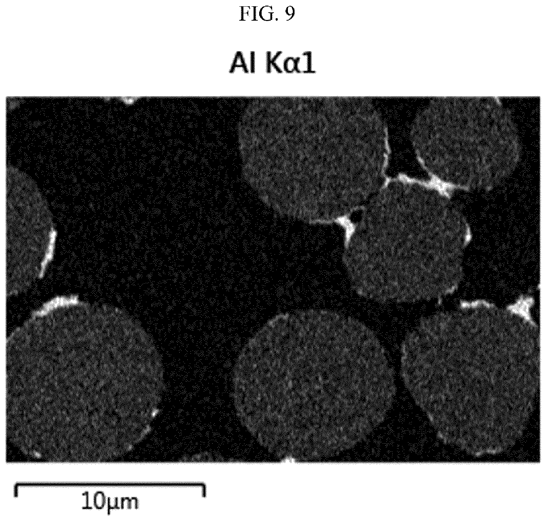

As shown in FIGS. 4 to 7, in the positive electrode active materials of Examples 1 to 4, a very thin aluminium coating layer with a substantially uniform thickness was successfully formed on the surface of a secondary particle to form a type or kind of a core-shell structure. In contrast, referring to FIG. 8, in Comparative Example 3 to which dry coating was applied, aluminium was irregularly aggregated on the surface of a secondary particle, but no coating layer wrapping the secondary particle was formed. In some embodiments, referring to FIGS. 9 and 10, in Comparative Example 5 utilizing a nickel-cobalt-aluminium oxide with a nickel content (e.g., amount) of about 94 mol% as a base material and applying the same coating method as in the examples, aluminium was aggregated on the surface of a secondary particle, and no coating layer wrapping the secondary particle was formed. Because the positive electrode active material of Comparative Example 5 had a different composition and also, a different residual lithium content (e.g., amount) and pH condition, etc. on the composite oxide surface from those of the examples, even though the same coating method as in the examples was applied, no substantially uniform coating layer was formed.

### Evaluation Example 3: Analysis of Coating Layer and Grain Boundary Coating Portion of Example

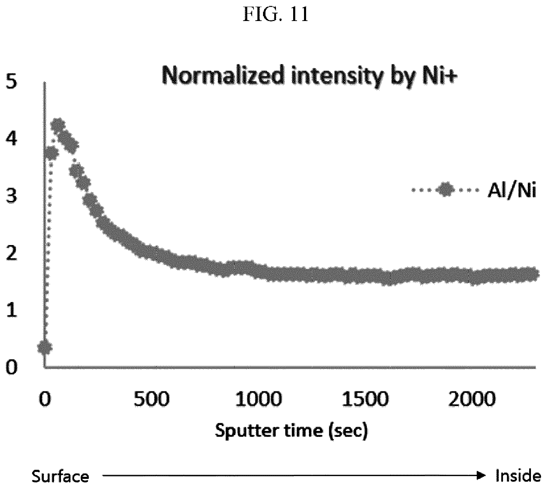

FIG. 11 is a TOF-SIMS depth profile of the positive electrode active material of Example 1, which is a graph showing a ratio change of an aluminium content (e.g., amount) to a nickel content (e.g., amount) from the surface of a secondary particle to the inside thereof.

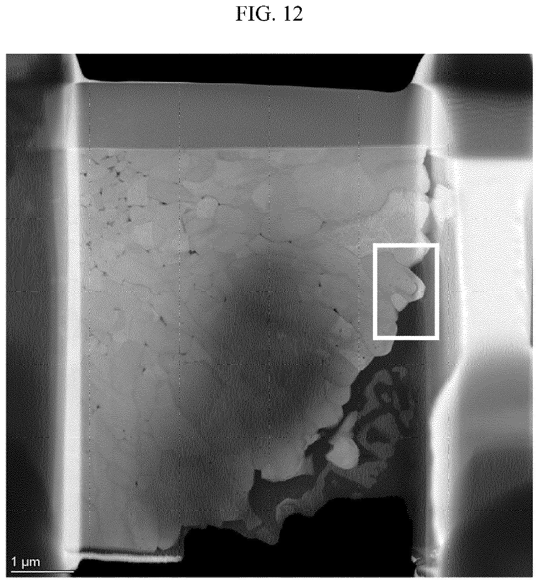

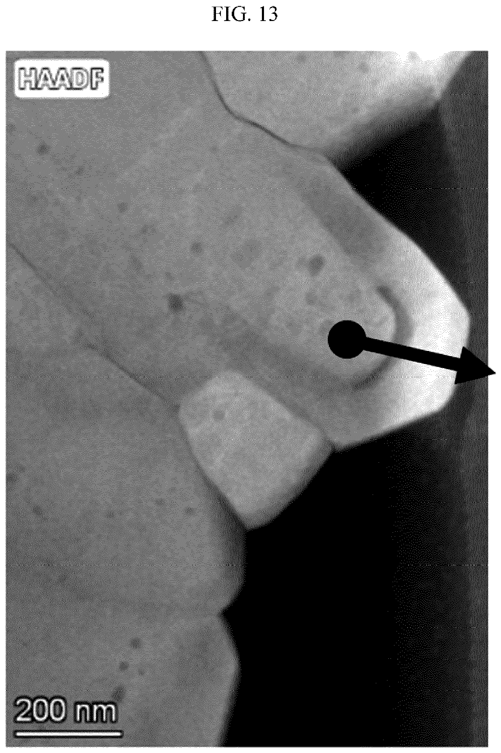

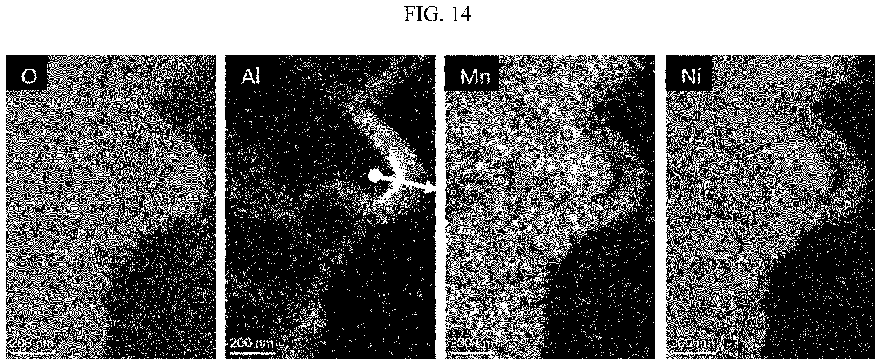

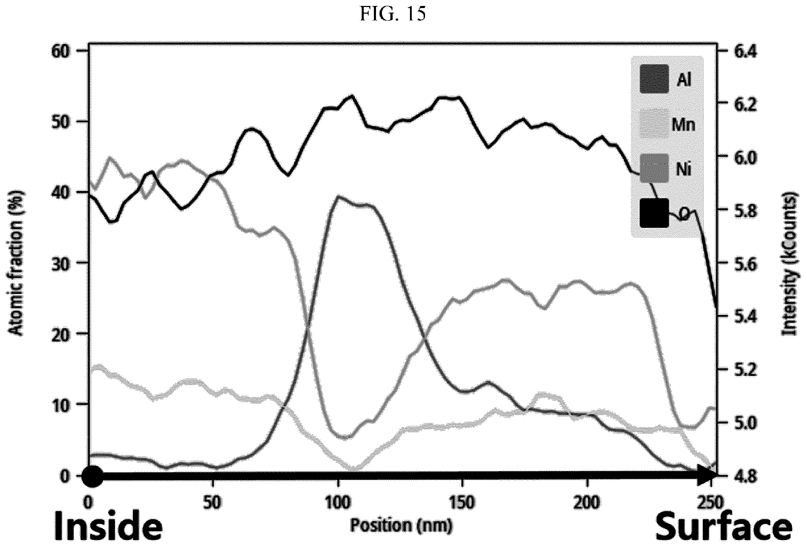

FIG. 12 is a TEM image of the cross section of the positive electrode active material of Example 1, and FIG. 13 is an enlarged image of the square-marked region in FIG. 12. FIG. 14 is an image obtained by performing EDS analysis on the TEM image of FIG. 13, highlighting oxygen, aluminium, manganese, and nickel in that order from the left. FIG. 15 is an EDS line profile showing changes of oxygen, aluminium, manganese, and nickel contents in the direction in the direction of arrows marked in FIGS. 13 and 14.

Referring to FIGS. 11 to 15, in the positive electrode active material of Example 1, a thin and substantially uniform Al coating layer with a thickness of about 30 nm to about 200 nm was formed on the surface of a core particle.

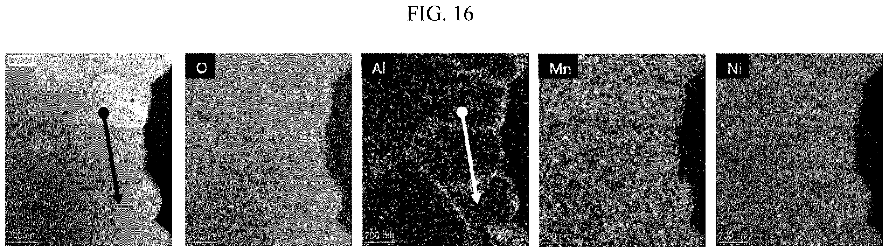

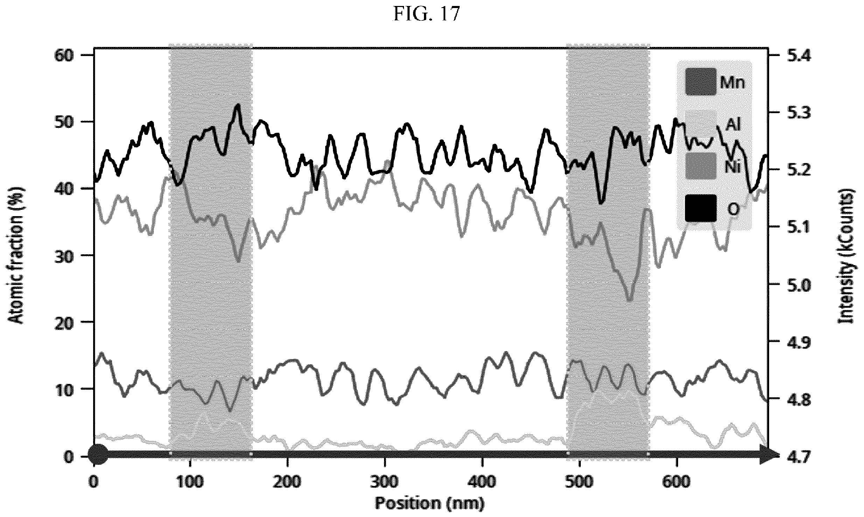

The leftmost image in FIG. 16 is a TEM image of the cross-section of the positive electrode active material of Example 1, which is an enlarged views of the primary particles located at the outmost layer of the secondary particle. The four rightmost images in FIG. 16 are TEM-EDS images sequentially highlighting O, Al, Mn, and Ni from left to right. FIG. 17 is an EDS line profile showing changes in the O, Al, Mn, and Ni contents in the direction of an arrow marked in FIG. 16. Referring to FIGS. 16 and 17, Al was coated on the interface of the primary particles located on the outmost of a secondary particle, that is, a grain boundary coating portion was formed.

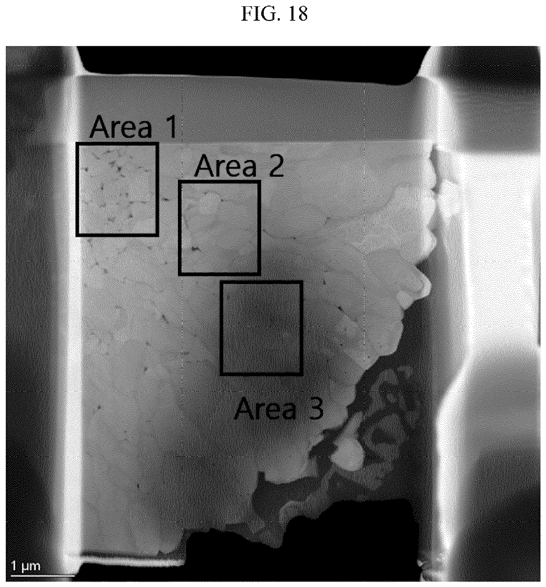

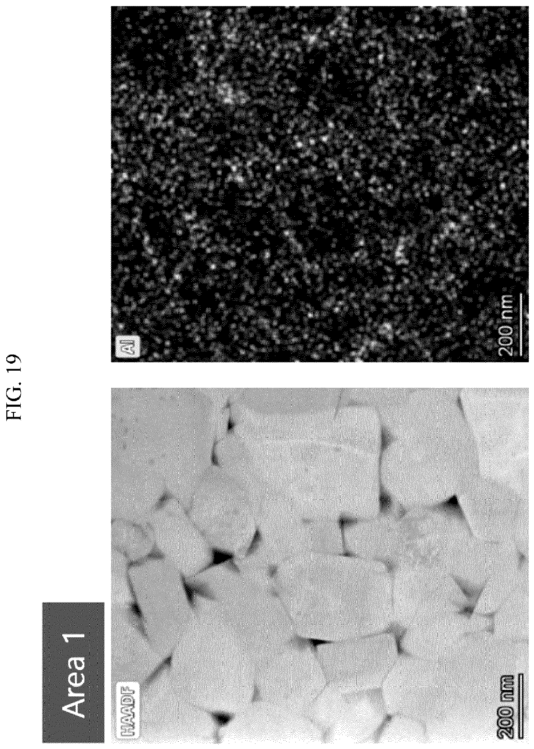

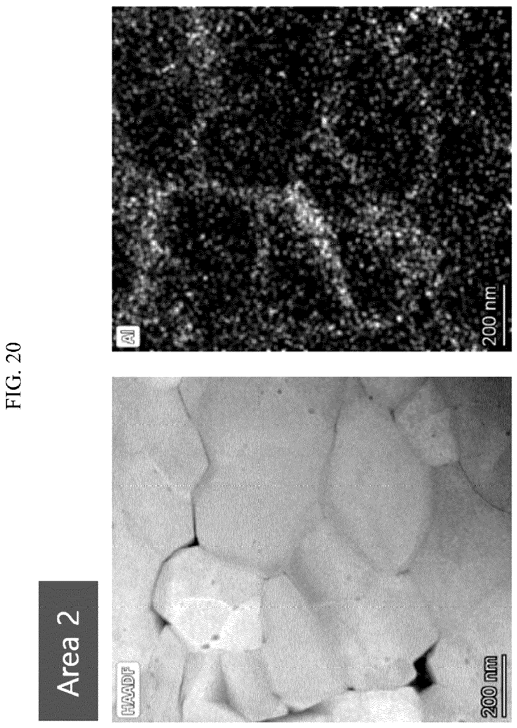

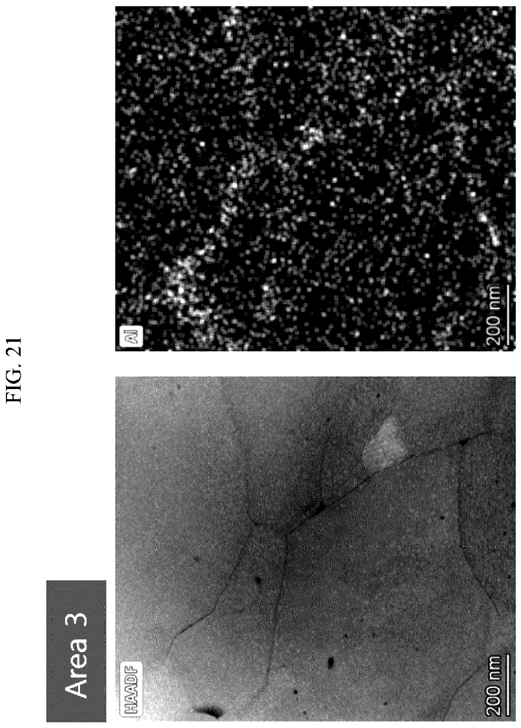

FIG. 18 is a TEM image of the cross section of the positive electrode active material of Example 1, and FIG. 19 is an enlarged image (left) of Area 1 of FIG. 18 and an image (right) highlighting aluminium through EDS analysis. FIG. 20 is an enlarged image (left) and an EDS analysis image (right) of Area 2 of FIG. 18, and FIG. 21 is an enlarged image (left) and an EDS analysis image (right) of Area 3 of FIG. 18. In FIG. 18, Area 1, Area 2, and Area 3 subsequentially shows core particles from the inside to the surface. Referring to FIGS. 18 to 21, an Al grain boundary coating portion on the interface of the primary particles was formed at any location including the inside of the core particles.

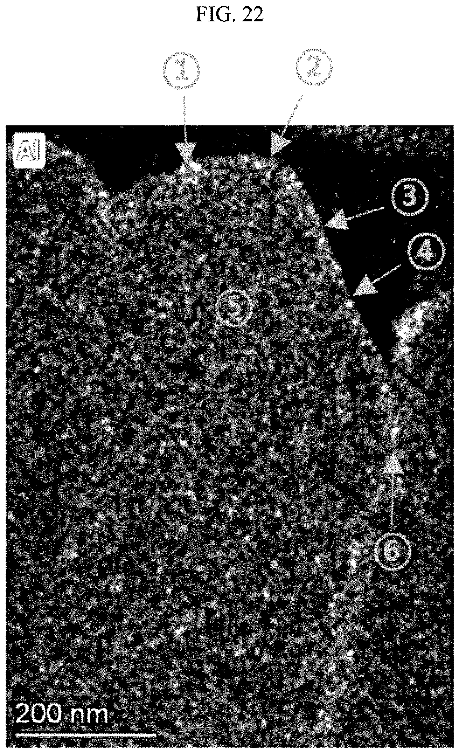

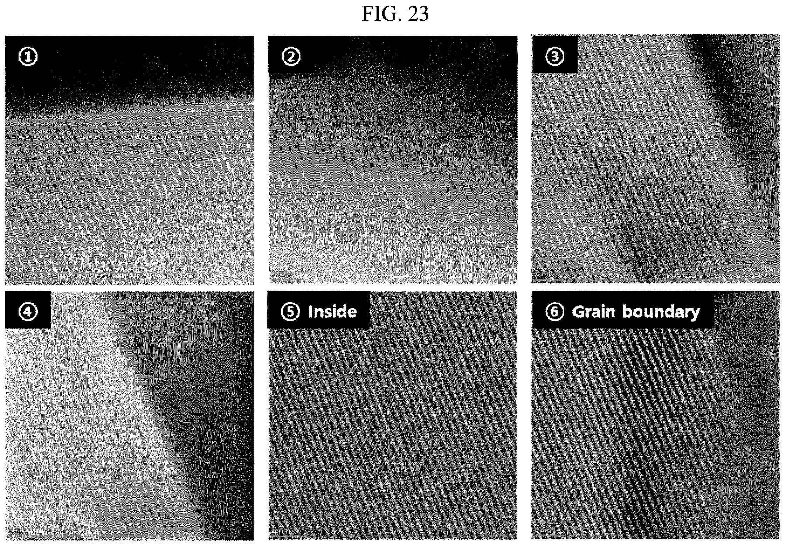

FIG. 22 is a TEM-EDS image showing a magnified analysis of the primary particles in the outermost layer of the secondary particle in the cross section of the positive electrode active material of Example 1, and the highlighted portion represents aluminium. FIG. 23 shows TEM analysis images of the regions indicated by the arrows 1 to 6 in FIG. 22. In FIG. 23, the arrows 1 to 4 indicate the surface of the secondary particle, which confirms an aluminium coating layer, the arrow 5 indicates the inside of the primary particles, and the arrow 6 indicates between the primary particles, that is, a grain boundary, which may confirm the aluminium grain boundary coating portion. Referring to FIG. 23, a layered structure was observed at all locations such as the surface of the secondary particle, the inside of the primary particles, and the grain boundary, etc. In other words, both (e.g., simultaneously) the coating layer and the grain boundary coating portion had a layered structure and accordingly, turned out to include layered lithium aluminium oxide, for example, LiAlO₂.

### Evaluation Example 4: Evaluation of Electrochemical Characteristics

The rechargeable lithium battery cells of Examples 1 to 4 and Comparative Examples 1 to 6 were charged to an upper limit voltage of about 4.45 V at a constant current of about 0.2 C and to about 0.05 C at a constant voltage and then, discharged to a cut-off voltage of about 3.0 V at about 0.2 C at about 25 °C. In Table 1, initial charge capacity, initial discharge capacity, and a ratio of the latter to the former as efficiency are provided. Subsequently, the cells were 25 times or more charged and discharged at about 1.0 C within a voltage range of about 3.0 V to about 4.45 V at about 45 °C, and a ratio of 25^{th} cycle discharge capacity to the initial discharge capacity was calculated and then, provided as a high temperature cycle-life in Table 1.

**Table 1**

| | Base material compositio n | Al addit ional dopi ng (mol %) | Al coati ng (mol %) | Al coati ng met hod | Initial charg e (mAh/ g) | Initial discha rge (mAh/ g) | Initial efficie ncy (%) | High-tempe rature cycle-life (%) |
|---|---|---|---|---|---|---|---|---|
| Example 1 | LiNi_{0.75}Mn_{0. 23}Al_{0.02}O₂ | - | 1 | wet | 229.1 | 195.2 | 85.2% | 88.9% |
| Example 2 | | - | 0.5 | | 229.9 | 196.3 | 85.4% | 84.8% |
| Example 3 | | - | 1.5 | | 228.3 | 194.0 | 85.0% | 89.9% |
| Example 4 | | - | 2 | | 227.8 | 192.9 | 84.7% | 91.2% |
| Comparative Example 1 | LiNi_{0.75}Mn_{0. 25}O₂ | 2 | - | - | 229.4 | 193.9 | 84.5% | 61.6% |
| Comparative Example 2 | LiNi_{0.75}Mn_{0. 23}Al_{0.02}O₂ | - | - | - | 229.6 | 194.8 | 84.8% | 65.1% |
| Comparative Example 3 | | - | 1 | dry | 229.7 | 195.6 | 85.2% | 75.1% |
| Comparative Example 4 | LiNi_{0.94}Co_{0. 03}Al_{0.03}O₂ | - | - | - | 247.7 | 219.5 | 88.6% | 78.3% |
| Comparative Example 5 | | - | 1 | wet | 243.4 | 211.6 | 86.9% | 77.9% |
| Comparative Example 6 | LiNi_{0.75}Mn_{0. 23}Al_{0.02}O₂ | - | 3 | wet | 224.2 | 186.5 | 83.2% | 90.3% |

Comparing Comparative Example 1 with Comparative Example 2, (i.e., when compared with Comparative Example 1, in which aluminium was additionally doped), Comparative Example 2, in which aluminium was introduced into a precursor, exhibited increased initial charge/discharge capacity and improved high temperature cycle-life characteristics. The examples utilizing Comparative Example 2 as a base material and forming a substantially uniform coating layer in a specific method according to some embodiments exhibited concurrently (e.g., simultaneously) improved initial charge/discharge capacity and efficiency and high temperature cycle-life characteristics by coating Al in a content (e.g., amount) of about 2 mol% or less.

In Comparative Example 3, to which a type or kind of dry coating was applied, because a substantially uniform coating layer was not formed as in Evaluation Example 2, high temperature cycle-life characteristics were significantly deteriorated, compared with the examples.

Comparative Examples 4 and 5 each utilizing a lithium nickel-cobalt-aluminium oxide with a nickel content (e.g., amount) of about 94 mol% exhibited high initial charge/discharge capacity and efficiency but deteriorated high temperature cycle-life characteristics, compared with the examples, and had a cost increase problem by utilizing cobalt. In Comparative Example 5, in which the same coating method as the examples was applied to the base material of Comparative Example 4, no substantially uniform coating layer as shown in Evaluation Example 2 was formed, and in addition, referring to Table 1, initial charge/discharge capacity and efficiency were rather deteriorated compared to Comparative Example 4. Accordingly, when a substantially uniform coating layer in the form of a shell around (e.g., surrounding) a core was not formed, battery charge and discharge capacity were deteriorated, while resistance increased, and cycle-life characteristics also were deteriorated or not improved.

On the other hand, in Comparative Example 6 utilizing an increased Al coating content (e.g., amount) of about 3 mol% as well as the same base material and the same coating method as the examples, initial discharge capacity was significantly reduced, and initial charge capacity and initial charge discharge efficiency also were deteriorated.

In present disclosure, "not include a or any 'component'", "exclude a or any 'component'", "'component'-free", and/or the like refers to that the "component" not being added, selected or utilized as a component in the composition or compound, but the "component" of less than a suitable amount may still be included due to other impurities and/or external factors.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

In the present disclosure, when particles are spherical, "diameter" indicates a particle diameter or an average particle diameter, and when the particles are non-spherical, the "diameter" indicates a major axis length or an average major axis length.

In present disclosure, "not include a or any 'component'" "exclude a or any 'component'", "'component'-free", and/or the like refers to that the "component" not being added, selected or utilized as a component in the composition/structure, but the "component" of less than a suitable amount may still be included due to other impurities and/or external factors.

While this present disclosure has been described in connection with what is presently considered to be practical example embodiments, it is to be understood that the present disclosure is not limited to the disclosed embodiments. In contrast, it is intended to cover one or more suitable modifications and equivalent arrangements included within the scope of the appended claims, and equivalents thereof.

### Description of Symbols

| | | | |
|---|---|---|---|
| 100: | rechargeable lithium battery | 10: | positive electrode |
| 20: | negative electrode | 30: | separator |
| 40: | electrode assembly | 50: | case |

Embodiments are set out in the following clauses:
Clause 1. A positive electrode active material, comprising
   a core particle comprising a lithium nickel-manganese-aluminum-based composite oxide, and
   a coating layer on a surface of the core particle and comprising aluminum,
   wherein a nickel content of the core particle is about 60 mol% to about 80 mol% and an aluminum content of the core particle is about 1 mol% to about 3 mol% based on about 100 mol% of a total metal excluding lithium, and
   wherein an aluminum content of the coating layer is about 0.1 mol% to about 2 mol% based on about 100 mol% of the total metal excluding lithium.
Clause 2. The positive electrode active material of clause 1, wherein
   the aluminum content of the coating layer is about 0.5 mol% to about 1.5 mol% based on about 100 mol% of the total metal excluding lithium.
Clause 3. The positive electrode active material of clause 1 or clause 2, wherein
   the coating layer is in a form of a shell that continuously surrounds the surface of the core particle.
Clause 4. The positive electrode active material of any one of clauses 1 to 3, wherein
   a thickness of the coating layer is about 30 nm to about 200 nm.
Clause 5. The positive electrode active material of any one of clauses 1 to 4, wherein
   a deviation of the thickness of the coating layer within one positive electrode active material is less than or equal to about 20%.
Clause 6. The positive electrode active material of any one of clauses 1 to 5, wherein
   the coating layer comprises an aluminum compound with a layered structure.
Clause 7. The positive electrode active material of any one of clauses 1 to 6, wherein
   the coating layer comprises LiAlO₂.
Clause 8. The positive electrode active material of any one of clauses 1 to 7, wherein
   the coating layer further comprises nickel, manganese, or a combination thereof.
Clause 9. The positive electrode active material of any one of clauses 1 to 8, wherein
   the lithium nickel-manganese-aluminum-based composite oxide of the core particle is represented by Chemical Formula 1:

      Chemical Formula 1 Liₐ₁Niₓ₁Mn_{y1}Al_{z1}M¹_{w1}O_{2-b1}X_{b1}
   wherein, in Chemical Formula 1, 0.9≤a1≤1.8, 0.6≤x1≤0.8, 0.1≤y1≤0.39, 0.01<z1≤0.03, 0≤w1≤0.29, 0.9≤x1+y1+z1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, and Zr, and X is one or more elements selected from among F, P, and S.
Clause 10. The positive electrode active material of any one of clauses 1 to 9, wherein
   a concentration of aluminum in the core particle is uniform.
Clause 11. The positive electrode active material of any one of clauses 1 to 10, wherein
   the lithium nickel-manganese-aluminum-based composite oxide of the core is a cobalt-free compound.
Clause 12. The positive electrode active material of any one of clauses 1 to 11, wherein
   a cobalt content is about 0 mol% to about 0.01 mol% based on about 100 mol% of a total metal excluding lithium.
Clause 13. The positive electrode active material of any one of clauses 1 to 12, wherein
   the core particle is in the form of a secondary particle made by aggregating a plurality of primary particles.
Clause 14. The positive electrode active material of clause 13, wherein
   the positive electrode active material further comprises a grain boundary coating portion on the surface of primary particles inside the secondary particle and comprising aluminum.
Clause 15. The positive electrode active material of clause 14, wherein
   the grain boundary coating portion comprises an aluminum compound with a layered structure.
Clause 16. The positive electrode active material or clause 14 or clause 15, wherein
   the grain boundary coating portion comprises LiAlO₂.
Clause 17. The positive electrode active material of any one of clauses 14 to 16, wherein
   the grain boundary coating portion further comprises nickel, manganese, or a combination thereof.
Clause 18. The positive electrode active material of any one of clauses 14 to 17, wherein
   an aluminum content in the grain boundary coating portion is less than the aluminum content in the coating layer.
Clause 19. The positive electrode active material of any one of clauses 14 to 18, wherein
   the positive electrode active material has an average particle diameter (D₅₀) of about 10 µm to about 18 µm.
Clause 20. The positive electrode active material of any one of clauses 14 to 19, wherein
   the positive electrode active material does not include sodium.
Clause 21. A method for preparing a positive electrode active material, the method comprising:
   mixing a nickel-manganese-aluminum-based composite hydroxide and a lithium raw material and performing a first heat treatment to obtain a lithium nickel-manganese-aluminum-based composite oxide; and
   adding and mixing the obtained lithium nickel-manganese-aluminum-based composite oxide to a solution of an aluminum raw material in an aqueous solvent, drying and performing a second heat treatment to obtain a positive electrode active material,
   wherein in the nickel-manganese-aluminum-based composite hydroxide, a nickel content is about 60 mol% to about 80 mol% and an aluminum content is about 1 mol% to about 3 mol% based on about 100 mol% of a total metal excluding lithium, and
   wherein in the positive electrode active material, an aluminum content in the aluminum raw material is about 0.1 mol% to about 2 mol% based on about 100 mol% of a total metal excluding lithium.
Clause 22. The method of clause 21, wherein
   the aluminum content in the aluminum raw material is about 0.5 mol% to about 1.5 mol% based on about 100 mol% of a total metal excluding lithium in the positive electrode active material.
Clause 23. The method of clause 21 or clause 22, wherein
   the aluminum raw material comprises aluminum nitrate, aluminum sulfate, aluminum carbonate, aluminum hydroxide, or a combination thereof.
Clause 24. The method of any one of clauses 21 to 23, wherein
   the solution of an aluminum raw material in an aqueous solvent has pH of about 1.5 to about 3.5.
Clause 25. The method of any one of clauses 21 to 24, wherein
   the adding and mixing of the obtained lithium nickel-manganese-aluminum-based composite oxide to the solution of aluminum raw material in the aqueous solvent is performed for about 5 to about 80 minutes, and a pH of the solution after mixing is about 4.5 to about 8.5.
Clause 26. The method of any one of clauses 21 to 25, wherein
   the drying is performed at about 40 °C to about 240 °C.
Clause 27. The method of any one of clauses 21 to 26, wherein
   the first heat treatment is performed at about 750 °C to about 950 °C, and
   the second heat treatment is performed at about 700 °C to about 850 °C.
Clause 28. A positive electrode, comprising
   a positive electrode current collector; and
   a positive electrode active material layer on the positive electrode current collector,
   wherein the positive electrode active material layer comprises the positive electrode active material of any one of clauses 1 to 20.
Clause 29. The positive electrode of clause 28, wherein
   a loading level of the positive electrode active material layer is about 10 mg/cm² to about 40 mg/cm².
Clause 30. The positive electrode of clause 28 or clause 29, wherein
   the positive electrode active material layer has a density of about 3.3 g/cc to about 3.7 g/cc.
Clause 31. A rechargeable lithium battery, comprising:
   the positive electrode according to any one of clauses 28 to 30;
   a negative electrode; and
   an electrolyte.
Clause 32. The rechargeable lithium battery of clause 31, wherein
   a charge voltage of the rechargeable battery is greater than or equal to about 4.45 V.

## Claims

1. A positive electrode active material, comprising
a core particle comprising a lithium nickel-manganese-aluminium-based composite oxide, and
a coating layer on a surface of the core particle and comprising aluminium, wherein a nickel content of the core particle is about 60 mol% to about 80 mol% and an aluminium content of the core particle is about 1 mol% to about 3 mol% based on about 100 mol% of a total metal excluding lithium, and
wherein an aluminium content of the coating layer is about 0.1 mol% to about 2 mol% based on about 100 mol% of the total metal excluding lithium.

2. The positive electrode active material as claimed in claim 1, wherein
the aluminium content of the coating layer is about 0.5 mol% to about 1.5 mol% based on about 100 mol% of the total metal excluding lithium.

3. The positive electrode active material as claimed in claim 1 or claim 2, wherein
the coating layer is in a form of a shell that continuously surrounds the surface of the core particle.

4. The positive electrode active material as claimed in any one of claims 1 to 3, wherein
a thickness of the coating layer is about 30 nm to about 200 nm.

5. The positive electrode active material as claimed in any one of claims 1 to 4, wherein
a thickness deviation of the coating layer within one positive electrode active material is less than or equal to about 20%.

6. The positive electrode active material as claimed in any one of claims 1 to 5, wherein
the coating layer comprises an aluminium compound with a layered structure.

7. The positive electrode active material as claimed in any one of claims 1 to 6, wherein
the coating layer comprises LiAlO₂.

8. The positive electrode active material as claimed in any one of claims 1 to 7, wherein:
(i) the coating layer further comprises nickel, manganese, or a combination thereof; and/or
(ii) the lithium nickel-manganese-aluminium-based composite oxide of the core particle is represented by Chemical Formula 1:
Chemical Formula 1 Liₐ₁Niₓ₁Mn_{y1}Al_{z1}M¹_{w1}O_{2-b1}X_{b1}
wherein, in Chemical Formula 1, 0.9≤a1 ≤1.8, 0.6≤x1≤0.8, 0.1≤y1≤0.39, 0.01<z1≤0.03, 0≤w1≤0.29, 0.9≤x1+y1+z1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, and Zr, and X is one or more elements selected from among F, P, and S; and/or
(iii) a concentration of aluminium in the core particle is uniform; and/or
(iv) the lithium nickel-manganese-aluminium-based composite oxide of the core is a cobalt-free compound; and/or
(v) a cobalt content is about 0 mol% to about 0.01 mol% based on about 100 mol% of a total metal excluding lithium.

9. The positive electrode active material as claimed in any one of claims 1 to 8, wherein
the core particle is in the form of a secondary particle made by aggregating a plurality of primary particles.

10. The positive electrode active material as claimed in claim 9, wherein
the positive electrode active material further comprises a grain boundary coating portion on the surface of primary particles inside the secondary particle and comprising aluminium;
optionally wherein:
(i) the grain boundary coating portion comprises an aluminium compound with a layered structure; and/or
(ii) the grain boundary coating portion comprises LiAlO₂; and/or
(iii) the grain boundary coating portion further comprises nickel, manganese, or a combination thereof; and/or
(iv) an aluminium content in the grain boundary coating portion is less than the aluminium content in the coating layer.

11. The positive electrode active material as claimed in any one of claims 1 to 10, wherein:
(i) the positive electrode active material has an average particle diameter (D₅₀) of about 10 µm to about 18 µm; and/or
(ii) the positive electrode active material does not include sodium.

12. A method for preparing a positive electrode active material, the method comprising:
mixing a nickel-manganese-aluminium-based composite hydroxide and a lithium raw material and performing a first heat treatment to obtain a lithium nickel-manganese-aluminium-based composite oxide; and
adding and mixing the obtained lithium nickel-manganese-aluminium-based composite oxide to a solution of an aluminium raw material in an aqueous solvent, drying and performing a second heat treatment to obtain a positive electrode active material,
wherein in the nickel-manganese-aluminium-based composite hydroxide, a nickel content is about 60 mol% to about 80 mol% and an aluminium content is about 1 mol% to about 3 mol% based on about 100 mol% of a total metal excluding lithium, and
wherein in the positive electrode active material, an aluminium content in the aluminium raw material is about 0.1 mol% to about 2 mol% based on about 100 mol% of a total metal excluding lithium.

13. The method as claimed in claim 12, wherein:
(i) the aluminium content in the aluminium raw material is about 0.5 mol% to about 1.5 mol% based on about 100 mol% of a total metal excluding lithium in the positive electrode active material; and/or
(ii) the aluminium raw material comprises aluminium nitrate, aluminium sulfate, an aluminium carbonate salt, aluminium hydroxide, or a combination thereof; and/or
(iii) the solution of an aluminium raw material in an aqueous solvent has pH of about 1.5 to about 3.5; and/or
(iv) the adding and mixing of the obtained lithium nickel-manganese-aluminium-based composite oxide to the solution of aluminium raw material in the aqueous solvent is performed for about 5 to about 80 minutes, and/or a pH of the solution after mixing is about 4.5 to about 8.5; and/or
(v) the drying is performed at about 40 °C to about 240 °C; and/or
(vi) the first heat treatment is performed at about 750 °C to about 950 °C, and/or the second heat treatment is performed at about 700 °C to about 850 °C.

14. A positive electrode, comprising
a positive electrode current collector; and
a positive electrode active material layer on the positive electrode current collector,
wherein the positive electrode active material layer comprises the positive electrode active material as claimed in any one of claims 1 to 11;
optionally wherein:
(i) a loading level of the positive electrode active material layer is about 10 mg/cm² to about 40 mg/cm²; and/or
(ii) the positive electrode active material layer has a density of about 3.3 g/cc to about 3.7 g/cc.

15. A rechargeable lithium battery, comprising:
the positive electrode according to claim 14;
a negative electrode; and
an electrolyte;
optionally wherein:
a charge voltage of the rechargeable battery is greater than or equal to about 4.45 V.
